# EUROPÄISCHE PATENTANMELDUNG

(11) **EP 2 853 688 A2**
(43) Veröffentlichungstag der Anmeldung: **01.04.2015**
(21) Anmeldenummer: 14186093.2
(22) Anmeldetag: 24.09.2014
(51) Int. Cl.: F01D 5/14, F01D 5/28, F01D 9/04

(54) **Schaufel für eine Gasturbine**

(30) Priorität: 30.09.2013 DE 102013219774
(71) Anmelder: MTU Aero Engines AG, 80995 München (DE)
(72) Erfinder: Lang, Christine, 85232 Bergkirchen (DE); Ramm, Günter, 82223 Eichenau (DE)

(57) **Zusammenfassung**

Die Erfindung betrifft eine Schaufel (12) für eine Gasturbine, insbesondere für ein Flugzeugtriebwerk, wobei die Schaufel (12) mindestens eine interne und/oder externe Stützstruktur (14) aus einem metallischen und/oder intermetallischen Material umfasst. Die Erfindung betrifft weiterhin ein Schaufelcluster (10) mit wenigstens einer derartigen Schaufel (12) für eine Gasturbine, ein Verfahren zum Herstellen eines solchen Schaufelclusters (10) sowie eine Gasturbine.

## Beschreibung

Die Erfindung betrifft eine Schaufel für eine Gasturbine. Die Erfindung betrifft weiterhin ein Schaufelcluster für eine Gasturbine mit wenigstens einer derartigen Schaufel, ein Verfahren zum Herstellen eines solchen Schaufelclusters sowie eine Gasturbine.

Schaufeln werden in unterschiedlichen Ausgestaltungen, beispielsweise als Leit- oder Laufschaufeln, Leitgittersegmente, Leitgitterkränze und dergleichen in Gasturbinen wie etwa Flugzeugtriebwerken oder stationären Industriegasturbinen verwendet. Üblicherweise bestehen solche Schaufeln aus Metalllegierungen oder intermetallischen Verbindungen. Zur Reduzierung des Kraftstoffverbrauchs von Gasturbinen wird eine stetige Verbesserung ihres Wirkungsgrads angestrebt. Eine Möglichkeit zur Verbesserung des Wirkungsgrads liegt beispielsweise in der Erhöhung der Turbineneintrittstemperaturen. Dies erfordert allerdings die Verwendung geeigneter Hochtemperaturwerkstoffe. Zur Herstellung von Schaufeln für Gasturbinen werden daher hochtemperaturfeste metallische und intermetallische Materialien wie beispielsweise Nickel- und Kobaltbasislegierungen und dergleichen verwendet. Die hierdurch erzeugten Schaufeln sind allerdings vergleichsweise schwer.

Eine weitere Möglichkeit, den Wirkungsgrad von Gasturbinen zu erhöhen und ihren Treibstoffverbrauch entsprechend zu reduzieren, besteht in der Verwendung möglichst leichter Werkstoffe, wie zum Beispiel Titanaluminidverbindungen, welche jedoch in der Regel sehr kostenintensiv sind. Weiterhin ist es bekannt, Schaufeln nicht aus Vollmaterial herzustellen, sondern mit Hohlräumen zu versehen. Jedoch können die Wanddicken wegen der gegebenen thermischen und mechanischen Anforderungen in der Gasturbine nicht beliebig reduziert werden.

Aufgabe der vorliegenden Erfindung ist es, eine hochtemperaturfeste und gewichtsreduzierte Schaufel für eine Gasturbine zu schaffen. Weitere Aufgaben der Erfindung bestehen darin, einen entsprechend hochtemperaturfesten und gewichtsreduzierten Schaufelcluster für eine Gasturbine bereitzustellen und ein Verfahren zum Herstellen eines solchen Schaufelclusters sowie eine Gasturbine mit einer hochtemperaturfesten und gewichtsreduzierten Schaufel bzw. einem hochtemperaturfesten und gewichtsreduzierten Schaufelcluster zu schaffen.

Die Aufgaben werden erfindungsgemäß durch eine Schaufel mit den Merkmalen des Patentanspruchs 1, ein Schaufelcluster mit den Merkmalen des Patentanspruchs 9, ein Verfahren zum Herstellen eines solchen Schaufelclusters gemäß Patentanspruch 15 sowie durch eine Gasturbine gemäß Patentanspruch 19 gelöst. Vorteilhafte Ausgestaltungen mit zweckmäßigen Weiterbildungen der Erfindung sind in den jeweiligen Unteransprüchen angegeben.

Ein erster Aspekt der Erfindung betrifft eine Schaufel für eine Gasturbine, insbesondere für ein Flugzeugtriebwerk. Die Schaufel weist dabei erfindungsgemäß eine interne und/oder externe Stützstruktur aus einem metallischen und/oder intermetallischen Material auf. Die Kraftübertragung der Schaufel erfolgt dabei vorteilhaft über die metallische bzw. intermetallische Stützstruktur.

In einer vorteilhaften Ausgestaltung der erfindungsgemäßen Schaufel ist die Stützstruktur zumindest bereichsweise von einer Ummantelung aus wenigstens einem keramischen Faserverbundwerkstoff umgeben. Dies gilt insbesondere für den Bereich der Schaufel, welcher während des bestimmungsgemäßen Gebrauchs der Schaufel im Gaskanal der Gasturbine angeordnet ist, d.h. für das Schaufelblatt, welches typischer Weise ein Tragflächenprofil aufweist. Bei einer derartigen Ausgestaltung der Schaufel erfolgt die Kraftübertragung wiederum vorteilhafterweise über die metallische bzw. intermetallische Stützstruktur, das heißt den Kern der Schaufel, die teilweise oder vollständig mit wenigstens einem keramischen Faserverbundwerkstoff (Ceramic Matrix Composites, CMC), beispielsweise in Form einer Schale oder Teilschale umgeben ist. Hierdurch wird einerseits eine Gewichtsreduzierung der Schaufel erzielt, die zu einer Verringerung des Treibstoffverbrauchs der zugeordneten Gasturbine führt. Andererseits erlaubt die Schaufel höhere Eintrittstemperaturen und ist daher beispielsweise für schnell laufende Niederdruckturbinen geeignet. Keramische Faserverbundwerkstoffe zeichnen sich in der Regel gegenüber den eingangs erwähnten metallischen oder intermetallischen Werkstoffen durch eine bessere Hitzebeständigkeit bei gleichzeitig geringem Gewicht aus. Dafür sind sie jedoch häufig hinsichtlich mechanischer Beanspruchungen weniger belastbar, da spröder.

Insbesondere bei völliger Ummantelung der Stützstruktur mit dem keramischen Faserverbundwerkstoff kann die Stützstruktur zudem aus einem metallischen Werkstoff gefertigt werden, welcher leichter und/oder kostengünstiger ist als der metallische oder intermetallische Werkstoff von herkömmlichen Schaufeln, da es durch den es umgebenden keramischen Faserverbundwerkstoff weniger hohen Temperaturen ausgesetzt ist. Wird für die Stützstruktur der metallische oder intermetallische Werkstoff von herkömmlichen Schaufeln verwendet, so ist es möglich, entsprechend weniger von diesem Werkstoff einzusetzen.

Als keramischen Faserverbundwerkstoff kann grundsätzlich jedes bekannte CMC-Material, beispielsweise C/C, C/SiC, SiC/SiC oder Al₂O₃/Al₂O₃, einzeln oder in beliebiger Kombination Verwendung finden. Die erfindungsgemäße Schaufel kann durch ihr geringeres Gewicht für höhere strukturmechanische Grenzen, beispielsweise erhöhte Schwingungsbelastung, bei gleichzeitig geringerer strukturmechanischer Belastung von inneren und äußeren Deckbändern, Naben, Aufhängungen und dergleichen ausgelegt werden. Hierdurch ergeben sich zusätzliche Vorteile für angrenzende Bauteile und Bauteilgruppen einer zugeordneten Gasturbine, da diese ebenfalls entsprechend leichter ausgebildet werden können.

Allgemein sei angemerkt, dass unter dem Begriff "Ummantelung" im Sinne der vorliegenden Erfindung nicht eine bloße Beschichtung einer metallischen oder intermetallischen Schaufel bzw. eines Schaufelblatts zu verstehen ist. Derartige, aus dem Stand der Technik bekannten Beschichtungen sind sehr dünn, d.h. sie weisen in der Regel nur eine Dicke von wenigen Mikrometern auf. Im Gegensatz hierzu ist gemäß der vorliegenden Erfindung unter "Ummantelung" eine Schale oder ein Schalenabschnitt zu verstehen, welcher eine wesentlich größere Dicke aufweist, insbesondere eine Dicke von wenigstens einem halben Millimeter, vorzugsweise von wenigstens einem Millimeter oder von mehreren Millimetern.

Zur Herstellung der erfindungsgemäßen Schaufel kann zunächst eine skelettierte oder aus einer gitterstrukturartigen und/oder bionischen Struktur bestehende interne und/oder externe Stützstruktur geschmiedet werden. Mit anderen Worten wird das ehemalige Schaufelblatt zu einem funktionalen strukturmechanischen Stützelement reduziert. Dieses kann grundsätzlich jede geeignete Geometrie bzw. bionische Struktur annehmen, da es lediglich eine Art Rückgrat(strebe) und/oder äußere Stützstruktur bereitstellen muss, um die im Betrieb der Gasturbine auftretenden Kräfte elastisch aufzunehmen. Durch Anbringen einer CMC-Schale, einer CMC-Teilschale oder eines CMC-Schaufelelements an und/oder innerhalb der Stützstruktur wird die Schaufel komplettiert. Hierzu kann beispielsweise eine CMC-Schale als Ummantelung über die als Rückgrat dienende Stützstruktur gesteckt und über eine nach außen und/oder innen gerichtete formschlüssige Steckverbindung mit dieser verbunden werden. Zusätzlich oder alternativ können die Stützstruktur und die Ummantelung vorzugsweise auch durch Löten, Schweißen und/oder Kleben stoffschlüssig verbunden werden. Alternativ oder zusätzlich kann ferner vorgesehen sein, dass das CMC-Material auf bzw. in die Stützstruktur eingegossen wird, wodurch eine mechanisch besonders stabile Anbindung der Ummantelung an die Stützstruktur erzielt wird. Anschließend kann die Schaufel bei Bedarf mit einem Deckband versehen werden. Die Ummantelung kann die Stützstruktur grundsätzlich teilweise oder vollständig umhüllen.

In einer vorteilhaften Ausgestaltung der Erfindung ist die Stützstruktur zumindest bereichsweise massiv und/oder durchbrochen und/oder gitterförmig und/oder porös ausgebildet. Dies erlaubt eine optimale Anpassung insbesondere des Gewichts und der mechanischen Eigenschaften der erfindungsgemäßen Schaufel an ihren jeweiligen Einsatzzweck.

In einer weiteren vorteilhaften Ausgestaltung der Erfindung ist vorgesehen, dass die Stützstruktur zumindest bereichsweise unmittelbar an einer Innenseite der Ummantelung anliegt und/oder dass zwischen der Stützstruktur und der Ummantelung wenigstens ein Hohlraum angeordnet ist. Indem die Stützstruktur unmittelbar an der Innenseite der Ummantelung anliegt können eine entsprechend gute Abstützung und eine mechanisch besonders hohe Stabilität erzielt werden. Umgekehrt kann durch das Vorsehen eines oder mehrerer Hohlräume zwischen der Stützstruktur und der Ummantelung das Gewicht der Schaufel weiter reduziert werden. Der Hohlraum bzw. die Hohlräume können zudem mit Kühlmedium zur inneren Kühlung der Schaufel beaufschlagt werden.

Weitere Vorteile ergeben sich, wenn die Stützstruktur über wenigstens ein Stützelement an einer Innenwand der Ummantelung abgestützt ist. Mit Hilfe eines Stützelements kann die Ummantelung an mechanisch besonders stark beanspruchten Bereichen gezielt abgestützt werden. Es kann weiterhin vorgesehen sein, dass die Ummantelung eine mit dem wenigstens einen Stützelement korrespondierende Nut oder Vertiefung aufweist. Alternativ oder zusätzlich ist vorgesehen, dass die Ummantelung auf die Stützstruktur aufgesteckt ist. Dies ermöglicht eine besonders einfache Herstellung der Schaufel bzw. des Schaufelprofils im Bereich des Schaufelblattes. Etwaig vorhandene Stützelemente können dabei vorteilhaft im Zusammenwirken mit etwaig vorhandenen Nuten in der Ummantelung als Positionierungs- bzw. Einschubhilfen dienen.

In einer weiteren vorteilhaften Ausgestaltung der Erfindung ist vorgesehen, dass die Ummantelung eine im Wesentlichen konvex geformte Saugseite und/oder eine im Wesentlichen konkav geformte Druckseite und/oder eine die Saugseite und die Druckseite verbindende Vorderkante und/oder eine die Saugseite und die Druckseite verbindende Hinterkante eines Schaufelblattes der Schaufel bildet. Mit anderen Worten ist es vorgesehen, dass die Ummantelung ein, mehrere oder vorzugsweise alle aerodynamischen Oberflächen der Schaufel bzw. des Schaufelblatts bildet. Dies erlaubt ebenfalls eine optimale Anpassung der Schaufel an unterschiedliche Einsatzzwecke sowie an die im Betrieb auftretenden mechanischen und thermischen Belastungen der Schaufel.

Weitere Vorteile ergeben sich, indem die Ummantelung wenigstens einen von der Stützstruktur abkragenden Endbereich zur bereichsweisen Abdeckung eines Bauteils der Gasturbine und/oder zur Anbindung einer angrenzenden Ummantelung einer weiteren Schaufel und/oder zur bereichsweisen Auskleidung eines Strömungskanals der Gasturbine umfasst. Durch einen derartig abkragenden bzw. abstehenden Endbereich kann die Ummantelung der Stützstruktur vorteilhaft zur Abdeckung bzw. Auskleidung weiterer Bauteile der Gasturbine verwendet werden.

In einer weiteren vorteilhaften Ausgestaltung der Erfindung ist vorgesehen, dass die Schaufel mit einer Nabe verbunden ist und/oder als Laufschaufel und/oder als Leitschaufel ausgebildet ist und/oder zusammen mit wenigstens einer weiteren Schaufel als Schaufelcluster vorliegt. Hierdurch kann die Schaufel besonders variabel für unterschiedliche Zwecke in unterschiedlichen Gasturbinen verwendet werden. Weiterhin kann die Schaufel als Leitschaufel zur Herstellung eines Leitgitters bzw. Leitgittersegments oder -kranzes verwendet werden. Ebenso kann die Schaufel als Laufschaufel eines Rotors ausgebildet sein. Weiterhin kann die Schaufel zusammen mit wenigstens einer weiteren Schaufel als Schaufelcluster vorliegen. Die wenigstens eine weitere Schaufel kann dabei grundsätzlich konventionell oder ebenfalls erfindungsgemäß ausgebildet sein.

Eine Laufschaufel weist typischer Weise einen Schaufelfuß auf, welcher beispielsweise schwalbenschanz- oder tannenbaumförmig sein kann, um in eine komplementär ausgebildete Nut in einer mit einer Rotorwelle verbundenen Scheibe eingeführt und gehalten zu werden. Radial außen schließt sich an dem Schaufelfuß in der Regel ein Innendeckband bzw. -plattform der Schaufel an. Hieran schließt sich weiter radial außen das eigentliche Schaufelblatt mit einem aerodynamischen Profil an, welches erfindungsgemäß eine metallische oder intermetallische Stützstruktur und eine diese Stützstruktur zumindest teilweise umgebende Schale bzw. Teilschale aus einem keramischen Faserverbundwerkstoff aufweist. Weiter radial außen kann die Schaufel zudem ein Außendeckband bzw. -plattform aufweisen.

Eine Leitschaufel weist im Gegensatz zu einer Laufschaufel keinen Schaufelfluss auf, kann aber ähnlich wie die Laufschaufel mit einem Innendeckband bzw. -plattform und/oder Außendeckband bzw. -plattform versehen sein. Zudem weist die Leitschaufel ferner ein Schaufelblatt auf, welches wie zuvor beschrieben aufgebaut sein kann.

Fertigungstechnisch können die Deckbänder separat von dem entsprechenden Schaufelblatt der Leit- oder Laufschaufel ausgebildet werden und ggf. gegen Erosion und/oder Oxidation beschichtet werden. Anschließend können die Deckbänder kraft- und/oder formschlüssig mit dem entsprechenden Schaufelblatt verbunden werden. Die Deckbänder können entweder aus einem metallischen bzw. intermetallischen Werkstoff oder aus einem keramischen Werkstoff, insbesondere aus einem keramischen Faserverbundwerkstoff, hergestellt sein. Die Herstellung der Deckbänder und/oder des Schaufelblattes kann mittels generativer bzw. additiver Verfahren und/oder mittels Wicklung und/oder Gelege in Formen erfolgen. Spezielle Webstühle sind heute in der Lage, keramische Fasern, ähnlich wie textile Stofffasern zu weben. Auch ist es denkbar, die gesamte Schaufel mittels generativer bzw. additiver Verfahren quasi einstückig herzustellen, wobei in diesem Fall bereichsweise metallische bzw. intermetallische und keramische Werkstoffe vorzugsweise mit einem Laser aufzuschmelzen sind.

Ein zweiter Aspekt der Erfindung betrifft ein Schaufelcluster für eine Gasturbine, insbesondere für ein Flugzeugtriebwerk. Das Schaufelcluster umfasst dabei wenigstens zwei miteinander verbundene Schaufeln. Wenigstens eine der Schaufeln kann dabei gemäß dem ersten Erfindungsaspekt ausgebildet sein. Alternativ oder zusätzlich kann auch wenigstens eine der Schaufeln des Schaufelclusters zumindest teilweise aus wenigstens einem keramischen Verbundwerkstoff ausgebildet sein, wohingegen wenigstens eine andere Schaufel des Schaufelclusters aus einem metallischen und/oder intermetallischen Werkstoff ausgebildet und im Wesentlichen frei von keramischen Verbundwerkstoff sein kann. "Im Wesentlichen frei von keramischen Verbundwerkstoff bedeutet dabei, dass die Schaufeln bzw. Schaufelblätter aus metallischem oder intermetallischem Werkstoff durchaus mit einem keramischen Verbundwerkstoff beschichtet sein können, wobei derartige Beschichtungen in der Regel, wie zuvor bereits erwähnt, ein Schichtdicke von deutlich unter einem Millimeter aufweisen.

Die sich hieraus ergebenden Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind. Grundsätzlich können mehrere oder alle Schaufeln des Schaufelclusters gemäß dem ersten Erfindungsaspekt ausgebildet sein. Für den Fall, dass in dem Schaufelcluster ein oder mehrere Schaufeln, zumindest im Bereich ihres Schaufelblattes, ausschließlich aus keramischen Verbundwerkstoff gebildet ist bzw. sind, wohingegen alle übrigen Schaufeln, zumindest im Bereich ihres Schaufelblattes, ausschließlich aus einem metallischen oder intermetallischen Werkstoff gebildet sind, übernehmen diese übrigen Schaufeln bzw. Schaufelblätter die erfindungsgemäße Funktion der Stützstruktur für die keramischen Schaufeln bzw. Schaufelblätter des Schaufelclusters.

In einer vorteilhaften Ausgestaltung der Erfindung sind die Schaufeln des Schaufelclusters mit einer Innenplattform und/oder einer Außenplattform verbunden. Hierdurch kann das Schaufelcluster im Hinblick auf seine mechanischen Eigenschaften sowie auf seine Strömungseigenschaften optimal an seinen jeweiligen Einsatzzweck angepasst werden. Die Innen- und/oder Außenplattform ist dabei vorzugsweise zumindest mit der Stützstruktur der erfindungsgemäßen Schaufel bzw. des Schaufelblattes verbunden. Die Innen- und/oder die Außenplattform kann dabei gleichzeitig als gemeinsames Befestigungsmittel der Schaufeln des Schaufelclusters fungieren bzw. ihrerseits mit einem solchen Befestigungsmittel verbunden sein.

Weitere Vorteile ergeben sich, wenn das Schaufelcluster eine ungerade Anzahl an Schaufeln und/oder abwechselnd eine Schaufel, die vollständig aus einem metallischen und/oder intermetallischen Material besteht, und eine gemäß dem ersten Erfindungsaspekt ausgebildete Schaufel umfasst. Indem das Schaufelcluster abwechselnd eine konventionelle und eine erfindungsgemäße Schaufel aufweist, wird ein hybrides Schaufelcluster erhalten, das eine risikoarme, systematische Annäherung an ein vollständig aus CMC gefertigtes Schaufelcluster ermöglicht. Es kann auch eine Schaufel bzw. ein Schaufelblatt verwendet werden, welche bzw. welches ausschließlich aus einem keramischen Faserverbundwerkstoff gebildet ist.

In einer weiteren vorteilhaften Ausgestaltung der Erfindung ist vorgesehen, dass aneinander angrenzende Ummantelungen von wenigstens zwei Schaufeln formschlüssig und/oder stoffschlüssig miteinander verbunden sind. Hierdurch kann zwischen den beiden Schaufeln bzw. Schaufelblättern eine thermisch und mechanisch belastbare Oberfläche geschaffen werden.

Weitere Vorteile ergeben sich, wenn das Schaufelcluster eine Abdeckung des Innen- und/oder Außendeckbandes bzw. -plattform und/oder eine Gehäuseabdeckung und/oder eine Auskleidung eines Strömungskanals aus wenigstens einem keramischen Faserverbundwerkstoff umfasst. Auch dies stellt eine konstruktiv vorteilhafte Möglichkeit dar, um thermisch und mechanisch hoch belastbare Oberflächen bereitzustellen.

Zu diesem Zweck hat es sich in weiterer Ausgestaltung als vorteilhaft gezeigt, wenn die ohnehin vorhandene CMC-Ummantelung der wenigstens einen erfindungsgemäßen Schaufel derart ausgebildet ist, dass sie beispielsweise als Deckband-, Gehäuse- und/oder Strömungskanalabdeckung bzw. -auskleidung verwendet bzw. mitverwendet werden kann.

Ein dritter Aspekt der Erfindung betrifft ein Verfahren zum Herstellen eines Schaufelclusters für eine Gasturbine, insbesondere für ein Flugzeugtriebwerk. Dabei ist es erfindungsgemäß vorgesehen, dass mindestens eine metallische und/oder intermetallische interne und/oder externe Stützstruktur wenigstens einer Schaufel mit einer, vorzugsweise metallischen und/oder intermetallischen, Innenplattform und einer, vorzugsweise metallischen und/oder intermetallischen, Außenplattform verbunden wird, und/oder dass wenigstens eine der Schaufeln des Schaufelclusters zumindest teilweise aus wenigstens einem keramischen Verbundwerkstoff ausgebildet wird, wohingegen wenigstens eine andere Schaufel des Schaufelclusters aus einem metallischen und/oder intermetallischen Werkstoff ausgebildet wird und im Wesentlichen frei von keramischen Verbundwerkstoff ist. Somit kann vorgesehen sein, dass wenigstens eine Schaufel des Schaufelclusters derart hergestellt wird, dass sie im Sinne des ersten und des zweiten Erfindungsaspekts eine Stützstruktur aus einem metallischen und/oder intermetallischen Material aufweist.

Die Stützstruktur kann wiederum zumindest bereichsweise mit einer Ummantelung aus wenigstens einem keramischen Faserverbundwerkstoff umhüllt werden. Die aus einem metallischen und/oder intermetallischen Material bestehende Stützstruktur wird mit einer ebenfalls metallischen und/oder intermetallischen Innen- und Außenplattform verbunden und kann wiederum zumindest bereichsweise mit wenigstens einem CMC-Material umhüllt werden. Hierdurch wird ein hochtemperaturfestes und gewichtsreduziertes Schaufelcluster mit wenigstens einer hybriden CMC-Schaufel erhalten. Grundsätzlich kann dabei vorgesehen sein, dass neben dieser hybriden CMC-Schaufel eine oder mehrere konventionell hergestellte Schaufeln vorgesehen und mit der Innen- und Außenplattform verbunden sind. Alternativ können mehrere oder alle Schaufeln als hybride CMC-Schaufeln ausgebildet sein. Weitere Merkmale und die sich daraus ergebenden Vorteile sind den Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

In einer vorteilhaften Ausgestaltung der Erfindung ist vorgesehen, dass die Innenplattform und wenigstens eine Stützstruktur zunächst im Verbund hergestellt werden, wonach die Ummantelung auf die Stützstruktur gesteckt und die Stützstruktur mit der Außenplattform verbunden wird. Alternativ oder zusätzlich ist vorgesehen, dass die Außenplattform und wenigstens eine Stützstruktur zunächst im Verbund hergestellt werden, wonach die Ummantelung auf die Stützstruktur gesteckt und die Stützstruktur mit der Innenplattform verbunden wird. Alternativ oder zusätzlich ist vorgesehen, dass die Innenplattform, die Außenplattform und wenigstens eine Stützstruktur zunächst unabhängig voneinander hergestellt werden, miteinander verbunden werden und die Stützstruktur anschließend mit der Ummantelung versehen wird. Hierdurch kann die wenigstens eine hybride Schaufel und damit das Schaufelcluster besonders flexibel hergestellt werden. Dabei kann grundsätzlich vorgesehen sein, dass unterschiedliche Schaufeln gleich oder unterschiedlich hergestellt werden.

Weitere Vorteile ergeben sich, wenn die Ummantelung der wenigstens einen Schaufel über eine Steckverbindung und/oder eine Clipsverbindung mit der Innenplattform und/oder mit der Außenplattform verbunden wird. Dies erlaubt eine besonders schnelle, einfache und kostengünstige Montage und Demontage der Ummantelung.

Ein vierter Aspekt der Erfindung betrifft eine Gasturbine, insbesondere ein Flugzeugtriebwerk, welche wenigstens eine gemäß dem ersten Erfindungsaspekt ausgebildete Schaufel und/oder wenigstens ein Schaufelcluster, welches gemäß dem zweiten Erfindungsaspekt ausgebildet und/oder mittels eines Verfahrens gemäß dem dritten Erfindungsaspekt hergestellt ist. Hierdurch ist eine Gasturbine geschaffen, bei welcher die Kraftübertragung der Schaufeln vorteilhaft über die metallische bzw. intermetallische Stützstruktur(en) erfolgt. Die sich hieraus ergebenden Merkmale und deren Vorteile sind den Beschreibungen des ersten, zweiten und dritten Erfindungsaspekts zu entnehmen, wobei vorteilhafte Ausgestaltungen des ersten, zweiten und dritten Erfindungsaspekts als vorteilhafte Ausgestaltungen des vierten Erfindungsaspekts und umgekehrt anzusehen sind.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Perspektivansicht eines erfindungsgemäßen Schaufelclusters;
- Fig. 2: einen schematischen Querschnitt durch eine erfindungsgemäße Schaufel;
- Fig. 3: einen schematischen Längsschnitt durch eine Nabe mit mehreren erfindungsgemäßen Schaufeln;
- Fig. 4: einen schematischen Längsschnitt durch eine Nabe, an welcher eine Ausführungsform der erfindungsgemäßen Schaufel befestigt ist;
- Fig. 5: einen schematischen Längsschnitt durch eine Nabe, an welcher die erfindungsgemäße Schaufel gemäß einer weiteren Ausführungsform befestigt ist;
- Fig. 6: einen schematischer Längsschnitt durch eine Nabe, an welcher die erfindungsgemäße Schaufel gemäß einer weiteren Ausführungsform befestigt ist; und
- Fig. 7: eine schematische Perspektivansicht eines erfindungsgemäßen Schaufelclusters gemäß einem weiteren Ausführungsbeispiel.

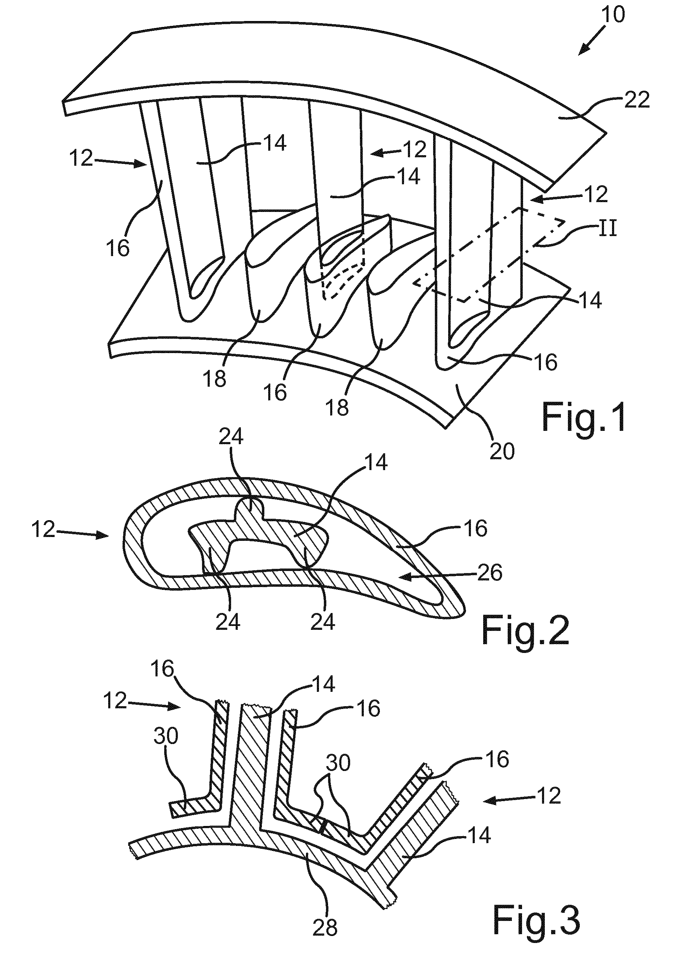

Fig. 1 zeigt eine schematische Perspektivansicht eines erfindungsgemäßen Schaufelclusters 10 für ein Flugzeugtriebwerk. In diesem Ausführungsbeispiel ist dabei ein Leitschaufelcluster 10 gezeigt. Alternativ könnte die Erfindung jedoch genauso gut zum Beispiel anhand eines Laufschaufelclusters veranschaulicht werden. Das gezeigte Schaufelcluster 10 umfasst in Anzahl und Anordnung beispielhafte fünf Schaufeln, von denen die äußeren Schaufeln 12 und die mittlere Schaufel 12 jeweils eine Stützstruktur 14 aus einem metallischen und/oder intermetallischen Material aufweisen. Diese Stützstrukturen 14 sind jeweils von einer Ummantelung 16 aus wenigstens einem keramischen Faserverbundwerkstoff (CMC) umgeben. Zur Verdeutlichung ist die Ummantelung 16 der mittleren Schaufel 12 nur teilweise abgebildet, so dass die Stützstruktur 14 bereichsweise frei liegt. Zwischen den Schaufeln 12 sind darüber hinaus zwei konventionelle Schaufeln 18 angeordnet, die jeweils vollständig aus einem metallischen und/oder intermetallischen Material bestehen. Auch diese Schaufeln 18 sind aus Gründen der Übersichtlichkeit nur teilweise abgebildet.

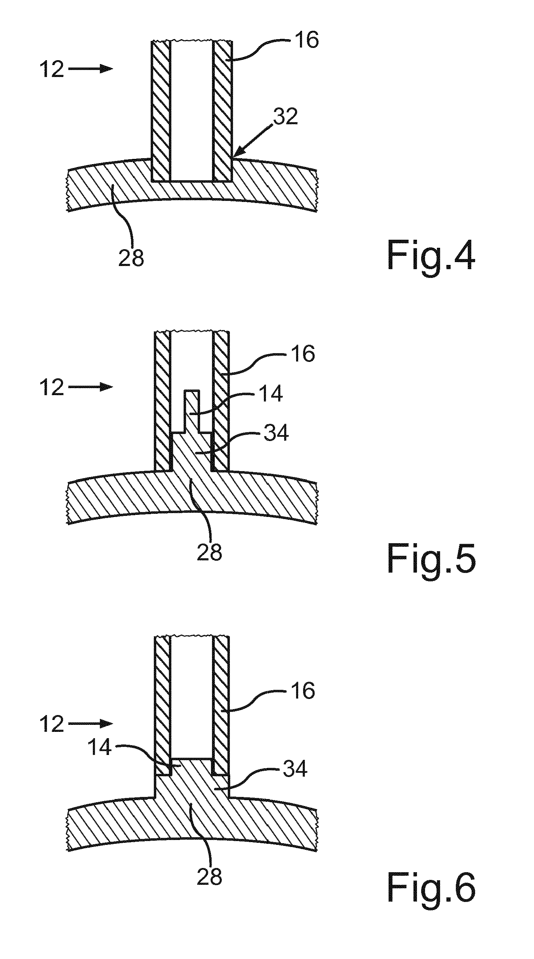

Die Stützstrukturen 14 sind jeweils mit einer Innenplattform 20 und einer Außenplattform 22 des Schaufelclusters 10 verbunden, um eine Kraftübertragung und -verteilung sowie eine Schwingungsdämpfung während des Betriebs des zugeordneten Flugzeugtriebwerks zu gewährleisten. Die CMC-Ummantelungen 16 sind demgegenüber in entsprechende Aufnahmen 32 (Fig. 4) in der Innenplattform 20 und der Außenplattform 22 eingelassen. Neben der gezeigten 1,3,5-Anordnung der hybriden CMC-Schaufeln 12 sind auch andere Anordnungen, beispielsweise 1,5, möglich. Die CMC-Schaufeln 12 ersetzen im vorliegenden Fall somit drei konventionelle Standardschaufeln 18 bzw. Schaufelblätter. Die beiden verbleibenden Standardschaufeln 18 werden zur Aufrechterhaltung der strukturmechanischen Integrität des Schaufelclusters 10 beibehalten. Das Schaufelcluster 10 kann darüber hinaus mit gleich oder andersartig aufgebauten Schaufelclustern 10 und/oder konventionellen Schaufelclustern (nicht gezeigt), das heißt mit Schaufelclustern, die ausschließlich Schaufeln 18 aus Metall und/oder einem intermetallischen Material umfassen, kombiniert werden, um einen Schaufelkranz zu bilden.

Zur Herstellung des Schaufelclusters 10 werden zunächst die Innenplattform 20, die Stützstrukturen 14, die konventionellen Schaufeln 18 und die Außenplattform 22 bereitgestellt. Hierbei können entweder die Innenplattform 20 und die Stützstrukturen 14 bzw. die konventionellen Schaufeln 18 bereits im Verbund und die Außenplattform 22 als separates Bauteil hergestellt werden. Alternativ können die Außenplattform 22 und die Stützstrukturen 14 bzw. die konventionellen Schaufeln 18 im Verbund und die Innenplattform 20 als separates Bauteil bereitgestellt werden. Ebenso ist es möglich, alle genannten Bauteile getrennt voneinander bereitzustellen. Die Stützstrukturen 14, das heißt die ehemaligen Schaufelblätter, sind gegenüber den konventionellen Schaufeln 18 auf funktionelle strukturmechanische Elemente reduziert. Die Stützstrukturen 14 können dabei grundsätzlich jede geeignete Geometrie oder bionische Struktur aufweisen, da sie lediglich eine Art Rückgrat(strebe) darstellen und im späteren Betrieb die Kräfte aufnehmen. Die Ummantelungen 16, die als aerodynamische Elemente fungieren, können als Schalen aus CMC gefertigt und über das Rückgrat der Stützstrukturen 14 gesteckt werden. Je nach Ausgestaltung der genannten Bauteile werden die Schaufeln 12 und 18 außen und/oder innen mit der Innenplattform 20 bzw. der Außenplattform 22 (Deckband) über eine nach außen oder innen gerichtete formschlüssige Steckverbindung verbunden. Die Verbindung kann zusätzlich mit Löten, Schweißen oder Kleben kraft- bzw. stoffschlüssig erfolgen. Eine derartige Verbindung ist insbesondere auch aus aerodynamischen Gründen vorteilhaft, um Spalte zu schließen.

Die Herstellung einer einzelnen Schaufeln 12, mit oder ohne Deckband bzw. Außenplattform 22, kann in ähnlicher Weise erfolgen. Beispielsweise kann zunächst ein Schaufelsockel (nicht gezeigt) mit einer skelettierten oder gitterstrukturartigen (bionischen Struktur) Stützstruktur 14 geschmiedet, gegossen und/oder generativ gefertigt werden. Durch Einbringen oder Herstellen einer als Schaufelblatt dienenden Ummantelung 16 und gegebenenfalls durch Verbinden der Ummantelung 16 mit dem Deckband, wird die Schaufel 12 ähnlich der oben beschriebenen Vorgehensweise komplettiert.

Fig. 2 zeigt einen schematischen Querschnitt durch eine erfindungsgemäße Schaufel 12 gemäß der in Fig. 1 gezeigten Schnittebene II. Man erkennt, dass die Stützstruktur 14 über in Anzahl und Anordnung beispielhafte drei integrale Stützelemente 24 an einer Innenwand der Ummantelung 16 abgestützt ist. Die Stützstruktur 14 füllt damit den Innenraum der CMC-Ummantelung 16 nicht vollständig aus, so dass gewichtssparende Hohlräume 26 verbleiben, durch die beispielsweise Kühlluft geleitet werden kann. Alternativ kann auch vorgesehen sein, dass die Stützstruktur 14 die Ummantelung 16 vollständig ausfüllt. Die Stützelemente 24 tragen unter anderem dazu bei, Vibrationen in der CMC-Ummantelung 16 zu verhindern oder zumindest zu reduzieren.

Fig. 3 zeigt einen schematischen Längsschnitt durch eine metallische Nabe 28 (bzw. die Innenplattform 20), an der mehrere erfindungsgemäße Schaufeln 12 befestigt sind. Im Unterschied zu der zuvor erwähnten Ausführungsform gemäß Figur 4 erkennt man, dass bei dieser Ausführungsform die CMC-Ummantelungen 16 der Schaufeln 12 jeweils einen von der Stützstruktur 14 abkragenden Endbereich 30 aufweisen. Aneinander angrenzende Endbereiche 30 sind beispielsweise stoffschlüssig oder über Clipsverbindungen aneinander festgelegt. Die CMC-Ummantelungen 16 kleiden auf diese Weise den zwischen den Schaufeln 12 liegenden Strömungskanal der Flugzeugturbine zum Schutz vor Heißgasen zumindest bereichsweise aus, überdecken die Nabe 28 und erleichtern zudem die Anbindung aneinander angrenzender Ummantelungen 16.

Fig. 4 bis Fig. 6 zeigen jeweils schematische Längsschnitte durch Naben 28 (bzw. Innenplattform 20), an denen jeweils unterschiedliche Ausführungsformen der erfindungsgemäßen Schaufel 12 in unterschiedlicher Weise befestigt sind. In der in Fig. 4 gezeigten Ausführungsform ist die CMC-Ummantelungen 16 der Schaufel 12 in einer korrespondierenden Aufnahme 32 in der Nabe 28 angeordnet. In dieser Ausführungsform ist keine Stützstruktur 14 dargestellt. Diese kann entweder hinzugedacht werden oder es kann sich bei dieser Schaufel um eine Schaufel handeln, deren Schaufelblatt ausschließlich aus CMC gebildet ist. In dem letzteren Fall übernimmt dann wenigstens eine weitere Schaufel des Schaufelclusters, deren Schaufelblatt herkömmlich aus metallischem oder intermetallischem Werkstoff gebildet ist, die Funktion der Stützstruktur.

In Fig. 5 umfasst die Nabe 28 (bzw. Innenplattform 20) einen Anschlussbereich 34, auf den einerseits die CMC-Ummantelungen 16 aufgesteckt und der andererseits stoffschlüssig mit der Stützstruktur 14 verbunden ist. Die Ummantelung 16 liegt auf der Nabe 28 (bzw. Innenplattform 20) auf.

Fig. 6 zeigt schließlich eine Ausführungsform, bei der die Ummantelung 16 auf die Stützstruktur 14 aufgesteckt ist und auf dem Anschlussbereich 34 der Nabe 28 (bzw. Innenplattform 20) aufliegt. Jedoch können auch viele weitere Anbindungsvarianten vorgesehen sein, die einzeln oder in beliebiger Kombination Anwendung finden können.

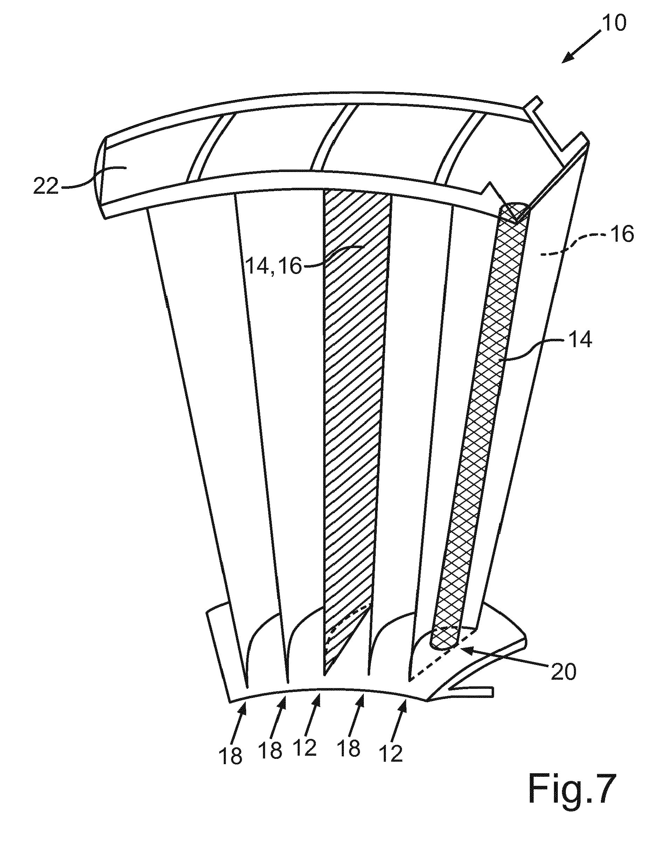

Fig. 7 zeigt eine schematische Perspektivansicht eines erfindungsgemäßen Schaufelclusters 10 gemäß einem weiteren Ausführungsbeispiel. Im Unterschied zum vorhergehenden Ausführungsbeispiel sind lediglich zwei der insgesamt fünf Schaufeln erfindungsgemäß als Schaufeln 12 mit CMC-Schaufelblatt ausgebildet, während die restlichen Schaufeln als konventionelle Schaufeln 18 ausgebildet sind. Die äußere Schaufel 12, die teiltransparent abgebildet ist, umfasst im Bereich ihres Schaufelblatts eine gitterartige Stützstruktur 14, während die mittlere Schaufel 12 im Bereich ihres Schaufelblatts eine CMC-Ummantelung 16 aufweist, die vollständig durch die Stützstruktur 14 ausgefüllt ist. Alternativ könnte die mittlere Schaufel 12 im Bereich ihres Schaufelblatts auch ausschließlich durch die CMC-Ummantelung 16 gebildet sein, d.h. keine metallische oder intermetallische Stützstruktur, die die Innenplattform 20 mit der Außenplattform 22 verbindet, aufweisen. In diesem Fall übernehmen dann wenigstens eine der anderen Schaufeln des Schaufelclusters die Funktion der Stützstruktur.

## Patentansprüche

1. Schaufel (12) für eine Gasturbine, insbesondere für ein Flugzeugtriebwerk,
**dadurch gekennzeichnet, dass**
die Schaufel (12) mindestens eine interne und/oder externe Stützstruktur (14) aus einem metallischen und/oder intermetallischen Material umfasst.

2. Schaufel (12) nach Anspruch 1,
**dadurch gekennzeichnet, dass**
die Stützstruktur (14) zumindest bereichsweise von einer Ummantelung (16) aus wenigstens einem keramischen Faserverbundwerkstoff umgeben ist.

3. Schaufel (12) nach Anspruch 1 oder 2,
**dadurch gekennzeichnet, dass**
die Stützstruktur (14) zumindest bereichsweise massiv und/oder durchbrochen und/oder gitterförmig und/oder porös ausgebildet ist.

4. Schaufel (12) nach Anspruch 2 oder 3,
**dadurch gekennzeichnet, dass**
die Stützstruktur (14) zumindest bereichsweise unmittelbar an einer Innenseite der Ummantelung (16) anliegt und/oder dass zwischen der Stützstruktur (14) und der Ummantelung (16) wenigstens ein Hohlraum angeordnet ist.

5. Schaufel (12) nach einem der Ansprüche 2 bis 4,
**dadurch gekennzeichnet, dass**
dass die Stützstruktur (14) über wenigstens ein Stützelement (24) an einer Innenwand der Ummantelung (16) abgestützt ist und/oder dass die Ummantelung (16) auf die Stützstruktur (14) aufgesteckt ist.

6. Schaufel (12) nach einem der Ansprüche 2 bis 5,
**dadurch gekennzeichnet, dass**
die Ummantelung (16)
- eine im Wesentlichen konvex geformte Saugseite und/oder
- eine im Wesentlichen konkav geformte Druckseite und/oder
- eine die Saugseite und die Druckseite verbindende Vorderkante und/oder
- eine die Saugseite und die Druckseite verbindende Hinterkante eines Schaufelblattes der Schaufel (12) bildet.

7. Schaufel (12) nach einem der Ansprüche 2 bis 6,
**dadurch gekennzeichnet, dass**
die Ummantelung (16) wenigstens einen von der Stützstruktur (14) abkragenden Endbereich (30) zur bereichsweisen Abdeckung eines Bauteils der Gasturbine und/oder zur Anbindung einer angrenzenden Ummantelung (16) einer weiteren Schaufel (12) und/oder zur bereichsweisen Auskleidung eines Strömungskanals der Gasturbine umfasst.

8. Schaufel (12) nach einem der Ansprüche 1 bis 7,
**dadurch gekennzeichnet, dass**
diese mit einer Nabe (28) verbunden ist und/oder als Laufschaufel und/oder als Leitschaufel ausgebildet ist und/oder zusammen mit wenigstens einer weiteren Schaufel (12, 18) als Schaufelcluster (10) vorliegt.

9. Schaufelcluster (10) für eine Gasturbine, insbesondere für ein Flugzeugtriebwerk, umfassend wenigstens zwei miteinander verbundene Schaufeln (12, 18),
**dadurch gekennzeichnet,**
**dass** wenigstens eine der Schaufeln (12) gemäß einem der Ansprüche 1 bis 8 ausgebildet ist,
und/oder dass wenigstens eine der Schaufeln (12) des Schaufelclusters (10) zumindest teilweise aus wenigstens einem keramischen Verbundwerkstoff ausgebildet ist, wohingegen wenigstens eine andere Schaufel (18) des Schaufelclusters (10) aus einem metallischen und/oder intermetallischen Werkstoff ausgebildet und im Wesentlichen frei von keramischen Verbundwerkstoff ist.

10. Schaufelcluster (10) nach Anspruch 9,
**dadurch gekennzeichnet, dass**
die Schaufeln (12) mit einer Innenplattform (20) und/oder einer Außenplattform (22) verbunden sind.

11. Schaufelcluster (10) nach Anspruch 9 oder 10,
**dadurch gekennzeichnet, dass**
dieses eine ungerade Anzahl an Schaufeln (12, 18) und/oder abwechselnd eine Schaufel (18), die vollständig aus einem metallischen und/oder intermetallischen Material besteht, und eine gemäß einem der Ansprüche 1 bis 7 ausgebildete Schaufel (12) umfasst.

12. Schaufelcluster (10) nach einem der Ansprüche 9 bis 11,
**dadurch gekennzeichnet, dass**
aneinander angrenzende Ummantelungen (16) von wenigstens zwei Schaufeln (12) formschlüssig und/oder stoffschlüssig miteinander verbunden sind.

13. Schaufelcluster (10) nach einem der Ansprüche 9 bis 12,
**dadurch gekennzeichnet, dass**
dieses eine Abdeckung des Innen- und/oder Außendeckbandes bzw. -plattform und/oder eine Gehäuseabdeckung und/oder eine Auskleidung eines Strömungskanals aus wenigstens einem keramischen Faserverbundwerkstoff umfasst.

14. Schaufelcluster (10) nach Anspruch 13,
**dadurch gekennzeichnet, dass**
die Nabenabdeckung und/oder die Gehäuseabdeckung und/oder die Auskleidung des Strömungskanals zumindest bereichsweise durch die Ummantelung (16) wenigstens einer Schaufel (12) gebildet ist.

15. Verfahren zum Herstellen eines Schaufelclusters (10) für eine Gasturbine, insbesondere für ein Flugzeugtriebwerk, bei welchem wenigstens zwei Schaufeln (12, 18) miteinander verbunden werden,
**dadurch gekennzeichnet,**
**dass** mindestens eine metallische und/oder intermetallische interne und/oder externe Stützstruktur (14) wenigstens einer Schaufel (12) mit einer, vorzugsweise metallischen und/oder intermetallischen, Innenplattform (20) des Schaufelclusters (10) und einer, vorzugsweise metallischen und/oder intermetallischen, Außenplattform (22) des Schaufelclusters (10) verbunden wird,
und/oder dass wenigstens eine der Schaufeln (12) des Schaufelclusters (10) zumindest teilweise aus wenigstens einem keramischen Verbundwerkstoff ausgebildet wird, wohingegen wenigstens eine andere Schaufel (18) des Schaufelclusters (10) aus einem metallischen und/oder intermetallischen Werkstoff ausgebildet wird und im Wesentlichen frei von keramischen Verbundwerkstoff ist.

16. Verfahren nach Anspruch 15,
**dadurch gekennzeichnet, dass** die Stützstruktur (14) zumindest bereichsweise mit einer Ummantelung (16) aus wenigstens einem keramischen Faserverbundwerkstoff umhüllt wird.

17. Verfahren nach Anspruch 16,
**dadurch gekennzeichnet, dass**
- die Innenplattform (20) und wenigstens eine Stützstruktur (14) zunächst im Verbund hergestellt werden, wonach die Ummantelung (16) auf die Stützstruktur (14) gesteckt und die Stützstruktur (14) mit der Außenplattform (22) verbunden wird; und/oder dass
- die Außenplattform (22) und wenigstens eine Stützstruktur (14) zunächst im Verbund hergestellt werden, wonach die Ummantelung (16) auf die Stützstruktur (14) gesteckt und die Stützstruktur (14) mit der Innenplattform (20) verbunden wird; und/oder dass
- die Innenplattform (20), die Außenplattform (22) und wenigstens eine Stützstruktur (14) zunächst unabhängig voneinander hergestellt werden, miteinander verbunden werden und die Stützstruktur (14) anschließend mit der Ummantelung (16) versehen wird.

18. Verfahren nach Anspruch 16 oder 17,
**dadurch gekennzeichnet, dass**
die Ummantelung (16) der wenigstens einen Schaufel (12) über eine Steckverbindung und/oder eine Clipsverbindung mit der Innenplattform (20) und/oder mit der Außenplattform (22) verbunden wird.

19. Gasturbine, insbesondere Flugzeugtriebwerk, umfassend wenigstens eine gemäß einem der Ansprüche 1 bis 8 ausgebildete Schaufel (12) und/oder wenigstens ein Schaufelcluster (10), welches gemäß einem der Ansprüche 9 bis 14 ausgebildet und/oder mittels eines Verfahrens nach einem der Ansprüche 15 bis 18 hergestellt ist.
